# EUROPEAN PATENT SPECIFICATION

(11) **EP 2 955 941 B1**
(45) Date of publication and mention of the grant of the patent: **29.03.2017**
(21) Application number: 15172014.1
(22) Date of filing: 24.10.2011
(51) Int. Cl.: H04W 4/02, H04M 1/725

(54) **METHOD FOR SHARING TERMINAL LOCATION AND TERMINAL DEVICE**
VERFAHREN ZUR GEMEINSAMEN STANDORTNUTZUNG VON ENDGERÄTEN UND ENDGERÄT
PROCÉDÉ DE PARTAGE D'EMPLACEMENT DE TERMINAL ET DISPOSITIF DE TERMINAL

(43) Date of publication of application: 16.12.2015
(62) Divisional of application: 11856378.2
(73) Proprietor: Huawei Device Co., Ltd., Shenzhen, Guangdong 518129 (CN)
(72) Inventor: Deng, Junjie, shenzhen Guangdong (CN); Yang, Zhiyan, shenzhen Guangdong (CN)
(74) Representative: Kreuz, Georg Maria

(56) References cited:
- US-A1- 2004 192 299
- US-A1- 2009 181 699

## Description

### FIELD OF THE INVENTION

The present invention relates to the field of electronic communication, and in particular, to a method for sharing a terminal location and a terminal device.

### BACKGROUND OF THE INVENTION

When using a mobile terminal, a user usually calls to ask questions to inquire a specific location, such as "Where are you?" and "Where do we meet?" Generally, some specific locations cannot be described clearly in language, and especially, when the user is in an unfamiliar environment, a situation of a location is hard to be described through only voice communication.

The documents US 2009/181699 A1 and US 2004/192299 A1 are known prior art.

The prior art has the following disadvantages: In the prior art, a single communication manner exists between terminals, and communication efficiency between terminal users is low.

### SUMMARY OF THE INVENTION

The present invention provides a method for sharing a terminal location and a terminal device, which can solve a problem of a single communication manner between terminals, and implement a new communication manner between the terminals, thereby implementing location sharing between the terminals, and improving communication efficiency between terminal users.

According to the first aspect a method for sharing a terminal location includes:
displaying, by a second terminal, a location of a first terminal and a location of the second terminal on a map of the second terminal in real time; receiving, by the second terminal, a candidate location sent by the first terminal; displaying, by the second terminal, the candidate location on the map of the second terminal, and modifying the candidate location; and sending, by the second terminal, the modified candidate location to the first terminal, so that the modified candidate location is also displayed on a map of the first terminal.

According to the second aspect of the present invention a terminal device includes:
a receiving module, configured to receive a candidate location sent by a first terminal; a map module, configured to display a location of the first terminal and a location of the terminal device on a map of the terminal device in real time, and display the candidate location or a modified candidate location on the map of the terminal device; a modifying module, configured to modify the candidate location, and notify the map module of the modified candidate location; and a sending module, configured to send the modified candidate location to the first terminal, so that the modified candidate location is also displayed on a map of the first terminal.

It can be seen from the foregoing technical solutions that the first terminal determines the candidate location, and notifies the second terminal of the candidate location, the first terminal and the second terminal display the location of the first terminal, the location of the second terminal and the candidate location synchronously on their respective maps, and the candidate location can be modified by the second terminal. Because the first terminal and the second terminal synchronously display the location of the first terminal, the location of the second terminal and the candidate location on their respective maps, when the candidate location is modified by the first terminal and/or the second terminal, the modified candidate location can be synchronously displayed on the respective maps of the first terminal and the second terminal, thereby providing an intercommunication manner of synchronously displaying an editable location on multiple terminals, implementing sharing of an agreed candidate location between the terminals, increasing the communication efficiency between the terminal users, and facilitating negotiation and determination of the terminal users for a meeting site.

### BRIEF DESCRIPTION OF THE DRAWINGS

To illustrate the technical solutions of the present invention more clearly, accompanying drawings describing embodiments of the invention are briefly introduced in the following. Apparently, the accompanying drawings in the following description show merely some embodiments of the present invention.
FIG. 1 is a flowchart of a method for sharing a terminal location according to an embodiment of the present invention;
FIGs. 2A and 2B are a flowchart of another method for sharing a terminal location according to an embodiment of the present invention;
FIGs. 3A and 3B are a flowchart of another method for sharing a terminal location according to an embodiment of the present invention;
FIG. 4 is a schematic structural diagram of a communication system according to an embodiment of the present invention;
FIG. 5 is a schematic structural diagram of a terminal device according to an embodiment of the present invention; and
FIG. 6 is a schematic structural diagram of another terminal device according to an embodiment of the present invention.

### DETAILED DESCRIPTION OF THE EMBODIMENTS

The technical solutions in the embodiments of the present invention are clearly and completely described in the following with reference to the accompanying drawings of embodiments of the present invention. Apparently, the embodiments show merely a part of rather than all embodiments of the present invention.

### Embodiment 1

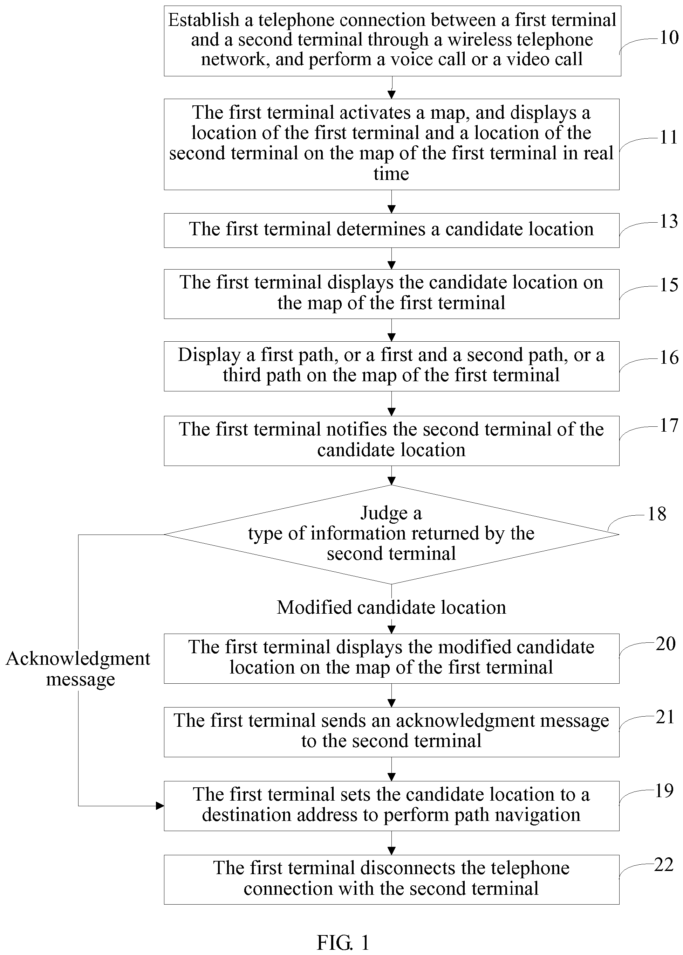

As shown in FIG. 1, an embodiment of the present invention provides a method for sharing a terminal location, and the method may include the following steps:
Step 11: A first terminal activates a map, and displays a location of the first terminal and a location of a second terminal on the map of the first terminal in real time.

Optionally, in step 11, after the first terminal activates the map, the first terminal may also display a path between the location of the first terminal and the location of the second terminal on the map of the first terminal, that is, after the first terminal activates the map, the first terminal may display, on the map of the first terminal, the location of the first terminal, the location of the second terminal, and the path between the two locations.

The first terminal may determine the location of the first terminal through one of or a combination of GPS locating, WiFi locating and base station locating. The first terminal receives the location which is of the second terminal and sent by the second terminal or a server, and the location of the second terminal may be determined by one of or a combination of GPS locating, WiFi locating and base station locating. Between the first terminal and the second terminal, the location of the first terminal, the location of the second terminal and a candidate location that is in a subsequent step may be sent through various communication connections, for example, the first terminal carries one or more of the foregoing location information in a short message, a multimedia message, signaling, an e-mail, or a data packet, and send the short message, the multimedia message, the signaling, the e-mail, or the data packet to the second terminal through a wireless telephone network, a WiFi connection or a Bluetooth connection. Step 13: The first terminal determines a candidate location; where the candidate location is an agreed location for a user of the first terminal to meet a user of the second terminal, and the location of the first terminal and the location of the second terminal are used to provide reference for determining the candidate location.

In step 13, the determining, by the first terminal, the candidate location may include: receiving, by the first terminal, a coordinate point input by the user, and using the coordinate point input by the user as the candidate location, where the coordinate point includes a geographic coordinate value input by the user or a point selected by the user on the map; or, automatically selecting, by the first terminal, a location point on the path between the location of the first terminal and the location of the second terminal, and using the automatically selected location point as the candidate location, where the location point includes a middle point of the path between the location of the first terminal and the location of the second terminal or any point of the path between the location of the first terminal and the location of the second terminal. It should be noted that, when the user inputs the coordinate point as the candidate location determined by the first terminal, the user may refer to the location of the first terminal and the location of the second terminal to select the coordinate point, so that when the first terminal determines the candidate location by using an input of the user, the first terminal refers to the location of the first terminal and the location of the second terminal.

In addition, when the first terminal selects the location point on the path between the location of the first terminal and the location of the second terminal, the first terminal may further obtain the location point through a path calculation, for example, determining, according to moving speeds of the first terminal and the second terminal, a meeting point of the first terminal and the second terminal when moving along the path in the current speeds as the location point. Definitely, when the first terminal selects the location point on the path between the location of the first terminal and the location of the second terminal, the first terminal may further automatically select a point where a landmark on the path is located as the location point, for example, selecting a point where a bus station, a certain building, or a certain shopping mall is located as the location point.

Step 15: The first terminal displays the candidate location on the map of the first terminal.

Optionally, in step 15, after the first terminal displays the candidate location on the map of the first terminal, the method for sharing a terminal location may further include step 16, which is that: on the map of the first terminal, displaying a first path using the location of the first terminal as a starting point and the candidate location as an ending point; or, on the map of the first terminal, displaying a first path using the location of the first terminal as a starting point and the candidate location as an ending point and a second path using the location of the second terminal as a starting point and the candidate location as an ending point; or, on the map of the first terminal, displaying a third path using the location of the first terminal as a starting point, the location of the second terminal as an ending point, and passing through the candidate location. When displaying the third path, if the user of the first terminal first arrives at the candidate location, the first terminal may continue guiding the user to proceed towards the location of the second terminal, and in this way, efficiency of navigation is improved and an operation is simplified, thereby avoiding a problem that after the user of the first terminal first arrives at the candidate location, the ending point of the path needs to be modified to perform the navigation again.

In addition, in step 11, after the first terminal activates the map, the first terminal further displays the path between the location of the first terminal and the location of the second terminal on the map of the first terminal, and therefore correspondingly in step 16, the displaying, on the map of the first terminal, the third path using the location of the first terminal as the starting point, the location of the second terminal as the ending point, and passing through the candidate location may specifically include: if the path which is between the location of the first terminal and the location of the second terminal and displayed in step 11 does not pass through the candidate location, adjusting the path between the location of the first terminal and the location of the second terminal, so that the adjusted path between the location of the first terminal and the location of the second terminal (that is, the third path) passes through the candidate location, and displaying, on the map of the first terminal, the adjusted path between the location of the first terminal and the location of the second terminal; or, if the path which is between the location of the first terminal and the location of the second terminal and displayed in step 11 passes through the candidate location, not adjusting the path between the location of the first terminal and the location of the second terminal, marking the candidate location on the path between the location of the first terminal and the location of the second terminal, and displaying, on the map of the first terminal, the path which is between the location of the first terminal and the location of the second terminal and has the candidate location marked (that is, the third path). It should be noted that, it may be that the first terminal automatically performs a path calculation and adjusts the path between the location of the first terminal and the location of the second terminal, and it may also be that the first terminal performs a path calculation and adjusts the path between the location of the first terminal and the location of the second terminal according to an operation instruction of the user, which is not limited.

Step 17: The first terminal notifies the second terminal of the candidate location, so that the candidate location is also display on a map of the second terminal, and the candidate location may be modified by the second terminal.

It should be noted that, in the embodiment of the present invention, a sequence of step 15, step 16 and step 17 is not limited, step 15 and step 16 may be executed first and then step 17 is executed, or step 17 may be executed first and then step 15 and step 16 are executed, or step 16 and step 15 may be executed first and then step 17 is executed, or step 15, step 16 and step 17 may also be executed at the same time.

Optionally, in step 17, after the first terminal notifies the second terminal of the candidate location, the method for sharing a terminal location may further include step 18, which is that: receiving, by the first terminal, information returned by the second terminal, and judging a type of the information returned by the second terminal, if the information returned by the second terminal is an acknowledgment message returned by the second terminal, executing step 19, or, if the information returned by the second terminal is a modified candidate location returned by the second terminal, executing step 20; step 19, which is that: setting, by the first terminal, the candidate location to a destination address to perform path navigation; and step 20, which is that: displaying, by the first terminal, the modified candidate location on the map of the first terminal. The acknowledgment message returned by the second terminal indicates that the second terminal accepts the candidate location, and does not modify the candidate location any more.

Optionally, after step 20, the method for sharing a terminal location may further include step 21, which is that: sending, by the first terminal, a acknowledgment message to the second terminal, where the acknowledgment message sent by the first terminal to the second terminal indicates that the first terminal accepts the modified candidate location, and does not modify the modified candidate location any more; after step 21 is executed, step 19 may be further executed, where the first terminal sets the modified candidate location to a destination address to perform path navigation. It should be noted that, the first terminal and the second terminal may modify the candidate location once or several times, which is not limited here. In this embodiment, the specific example that the first terminal sets the candidate location and the second terminal modifies the candidate location once is only provided as an example, and in another embodiment, after the second terminal modifies the candidate location, the first terminal may also modify the candidate location once more, and the operation may be repeated once or several times until the first terminal and the second terminal come to an agreement. Optionally, before the first terminal activates the map in step 11, the method for sharing a terminal location may further include step 10, which is that: establishing a telephone connection between the first terminal and the second terminal through a wireless communication network, and performing a voice call or a video call; where a voice call interface of the first terminal includes a button for activating the map of the first terminal, the wireless communication network may be a wireless telephone network, such as a GSM (Global System for Mobile communications, global system for mobile communications) network, a CDMA (Code Division Multiple Access, code division multiple access) network, a WCDMA (Wideband Code Division Multiple Access, wideband code division multiple access) network, a TD-SCDMA (Time Division-Synchronous Code Division Multiple Access, time division-synchronous code division multiple access) network, and a CDMA2000 (Code Division Multiple Access 2000) network. In this case, when the user clicks the button for activating the map of the first terminal, the first terminal executes step 11. In addition, the button for activating the map of the first terminal may be: a virtual button on the voice call interface of the first terminal, or a physical button corresponding to a certain functional key on the voice call interface of the first terminal, which is not limited here. In addition, when the user clicks the button for activating the map of the first terminal, the first terminal may also automatically switch to a hands-free mode to perform the voice call by using a loudspeaker, thereby facilitating the user of the first terminal to perform the voice call or the video call at the same time when the first terminal executes subsequent steps.

Optionally, after the first terminal starts the path navigation in step 19, the method for sharing a terminal location may further include step 22, which is that: disconnecting, by the first terminal, the telephone connection with the second terminal. The disconnecting, by the first terminal, the telephone connection with the second terminal may include: according to an operation of the user, disconnecting, by the first terminal, the telephone connection with the second terminal and established through the wireless communication network; or, when the first terminal starts the path navigation, automatically disconnecting, by the first terminal, the telephone connection which is with the second terminal and established through the wireless communication network.

In the embodiment of the present invention, the first terminal determines the candidate location, and notifies the second terminal of the candidate location, the first terminal and the second terminal display the location of the first terminal, the location of the second terminal and the candidate location synchronously on their respective maps, and the candidate location can be modified by the second terminal. Because the first terminal and the second terminal synchronously display the location of the first terminal, the location of the second terminal and the candidate location on their respective maps, when the candidate location is modified by the first terminal and/or the second terminal, the modified candidate location can be synchronously displayed on the respective maps of the first terminal and the second terminal, thereby providing an intercommunication manner of synchronously displaying an editable location on multiple terminals, implementing sharing of an agreed candidate location between terminals, increasing communication efficiency between terminal users, and facilitating negotiation and determination of the terminal users for a meeting site.

### Embodiment 2

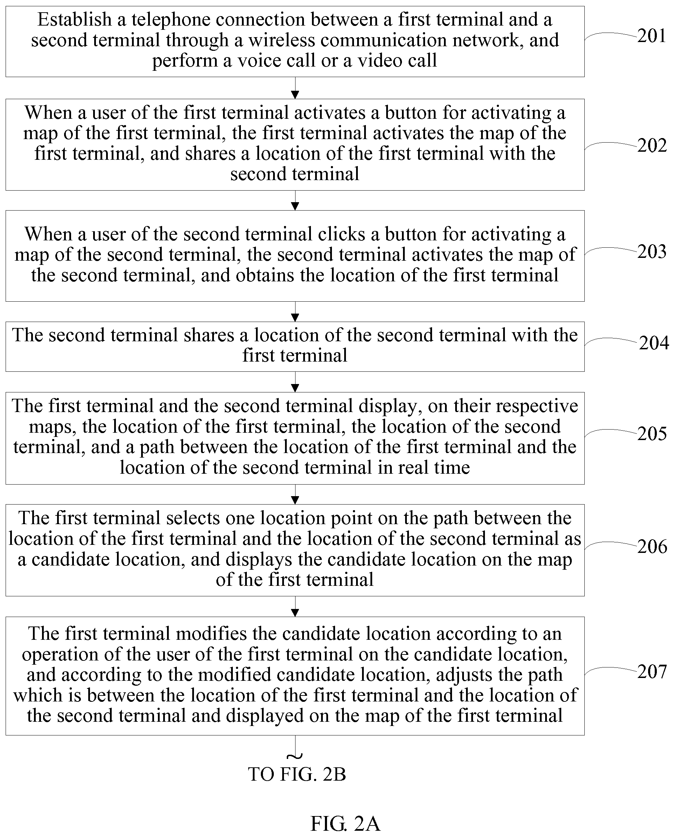

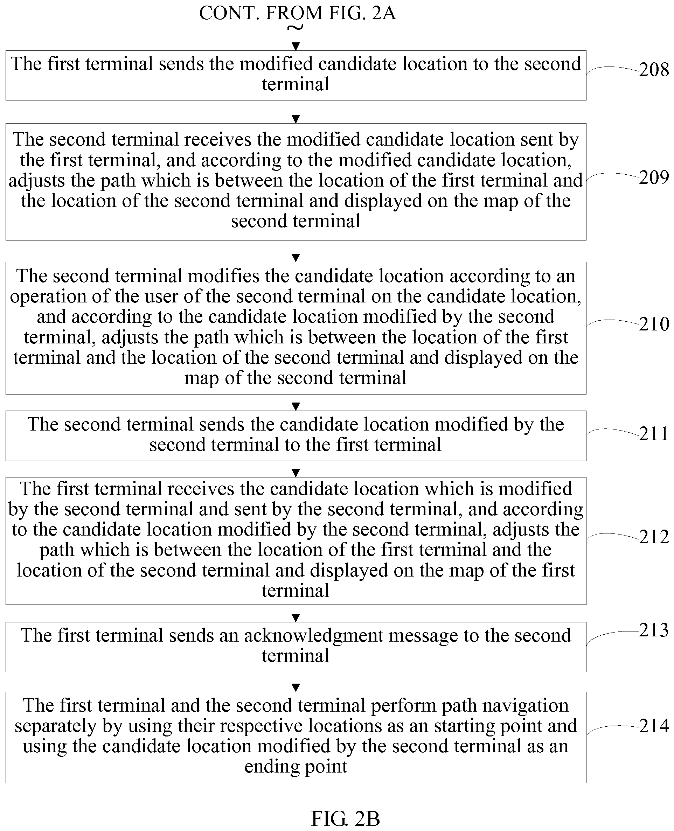

As shown in FIG. 2, an embodiment of the present invention provides a method for sharing a terminal location, and the method may include the following steps:
Step 201: Establish a telephone connection between a first terminal and a second terminal through a wireless communication network, and perform a voice call or a video call; where a voice call interface of the first terminal includes a button for activating a map of the first terminal, and a voice call interface of the second terminal includes a button for activating a map of the second terminal.

The button for activating the map may be: a virtual button on the voice call interface, or a physical button corresponding to a certain functional key on the voice call interface, which is not limited here.

Step 202: When a user of the first terminal clicks the button for activating the map of the first terminal, the first terminal activates the map of the first terminal, and shares a location of the first terminal with the second terminal.

The sharing, by the first terminal, the location of the first terminal with the second terminal may be: obtaining, by the first terminal, the location of the first terminal by one of or a combination of GPS locating, WiFi locating and base station locating, and then, sending, by the first terminal, the location of the first terminal directly to the second terminal; or, obtaining, by a server at a network side, the location of the first terminal by one of or a combination of GPS locating, WiFi locating and base station locating, and then, according to a notification of the first terminal, after the user of first terminal agrees to share the location of the first terminal, sending, by the server, the location of the first terminal to the second terminal. The first terminal may share the location of the first terminal with the second terminal before activating the map of the first terminal, and may also share the location of the first terminal with alocation of the second terminal after activating the map of the first terminal, which is not limited here. Step 203: When a user of the second terminal clicks the button for activating the map of the second terminal, the second terminal activates the map of the second terminal, and obtains the location of the first terminal.

The obtaining, by the second terminal, the location of the first terminal may be: receiving, by the second terminal, the location which is of the first terminal and directly sent by the first terminal; or, receiving, by the second terminal, the location which is of the first terminal and sent by the server at the network side. The second terminal may obtain the location of the first terminal before activating the map of the second terminal, and may also obtain the location of the first terminal after activating the map of the second terminal, which is not limited here.

Step 204: The second terminal shares a location of the second terminal with the first terminal.

The sharing, by the second terminal, the location of the second terminal with the first terminal may include: after the second terminal activates the map of the second terminal and/or obtains the location of the first terminal, sending, by the second terminal, the location of the second terminal to the first terminal directly or notifying the server that the server should send the location of the second terminal to the first terminal; or, after the second terminal receives an instruction that the user agrees to share the location of the second terminal, sending, by the second terminal, the location of the second terminal to the first terminal directly or notifying the server that the server should send the location of the second terminal to the first terminal. After the second terminal receives the instruction that the user agrees to share the location of the second terminal, when the second terminal shares the location of the second terminal with the first terminal, the user of the second terminal may exercise control over whether to share the location of the second terminal, thereby ensuring confidentiality and security of data of the user of the second terminal.

In addition, execution of step 202, step 203 and step 204 are independent to each other, and their sequence is not limited. In FIG. 2, step 204 is set behind step 202 and step 203 only as an example, which is not used as a limitation on the sequence of the steps.

Step 205: The first terminal and the second terminal display, on their respective maps, the location of the first terminal, the location of the second terminal, and a path between the location of the first terminal and the location of the second terminal in real time.

The path between the location of the first terminal and the location of the second terminal may be calculated through a navigation algorithm in the map, and reference may be made to the prior art for details, which are not repeatedly described here.

Step 206: The first terminal selects a location point on the path between the location of the first terminal and the location of the second terminal as a candidate location, and displays the candidate location on the map of the first terminal.

It should be noted that, there are several manners for determining the candidate location, and for details, reference may be made to the related description of step 13 in the embodiment.

Step 207: The first terminal modifies the candidate location according to an operation of the user of the first terminal on the candidate location, and according to the modified candidate location, adjusts the path which is between the location of the first terminal and the location of the second terminal and displayed on the map of the first terminal, so that the adjusted path passes through the modified candidate location.

The modifying, by the first terminal, the candidate location according to the operation of the user of the first terminal on the candidate location may include: dragging, by the user of the first terminal and on a touch screen, an identification of the candidate location displayed on the map of the first terminal, and using a location of the identification of the candidate location when the dragging stops as the modified candidate location; or, moving, by the user of the first terminal and through a button, an identification of the candidate location displayed on the map of the first terminal, and using a location of the identification of the candidate location when the moving stops as the modified candidate location; or, inputting, by the user of the first terminal, a new coordinate point through clicking a touch screen or using a keyboard, and using the new coordinate point as the modified candidate location.

In addition, when the path which is between the location of the first terminal and the location of the second terminal and displayed on the map of the first terminal is adjusted according to the modified candidate location, the path may be adjusted in real time according to a modification on the candidate location, and the path may also be adjusted according to a final candidate location after the modification on the candidate location is completed.

Step 208: The first terminal sends the modified candidate location to the second terminal.

A manner for the first terminal to send the modified candidate location may include: sending, by the first terminal, the modified candidate location directly through a communication connection with the second terminal, or, sending, by the first terminal, the modified candidate location to the server at the network side, and forwarding, by the server at the network side, the modified candidate location to the second terminal. For the sending, by the first terminal, the modified candidate location directly through the communication connection with the second terminal, reference may be made to the related description in Embodiment 1, and details are not repeatedly described herein.

It should be noted that, step 207 is an optional step; when the user does not modify the candidate location, for example, the user directly clicks a Confirm key after step 206 to send the candidate location, step 207 may not be executed, and in this case, in step 208, a location point that is selected by the first terminal on the path between the location of the first terminal and the location of the second terminal is directly used as the candidate location and sent to the second terminal, and then the second terminal uses the candidate location automatically selected by the first terminal to perform subsequent operations.

Step 209: The second terminal receives the modified candidate location sent by the first terminal, and according to the modified candidate location, adjusts the path which is between the location of the first terminal and the location of the second terminal and displayed on the map of the second terminal, so that the adjusted path passes through the modified candidate location.

For an implementation manner for adjusting the path according to the modified candidate location in step 209, reference may be made to the corresponding content of step 207, and details are not repeatedly described here.

Step 210: The second terminal modifies the candidate location according to an operation of the user of the second terminal on the candidate location, and according to the candidate location modified by the second terminal, adjusts the path which is between the location of the first terminal and the location of the second terminal and displayed on the map of the second terminal, so that the adjusted path passes through the candidate location modified by the second terminal.

An implementation manner of step 210 is similar to that of step 207, and is not repeatedly described here.

Step 211: The second terminal sends the candidate location modified by the second terminal to the first terminal.

An implementation manner of step 211 is similar to that of step 208, and is not repeatedly described here.

Step 212: The first terminal receives the candidate location which is modified by the second terminal and sent by the second terminal, and according to the candidate location modified by the second terminal, adjusts the path which is between the location of the first terminal and the location of the second terminal and displayed on the map of the first terminal, so that the adjusted path passes through the candidate location modified by the second terminal.

An implementation manner of step 212 is similar to that of step 209, and is not repeatedly described here.

Step 213: The first terminal sends an acknowledgment message to the second terminal, where the acknowledgment message sent by the first terminal to the second terminal indicates that the first terminal accepts the candidate location modified by the second terminal, and does not modify the candidate location modified by the second terminal any more.

Step 214: The first terminal and the second terminal perform path navigation separately by using their respective locations as a starting point and using the candidate location modified by the second terminal as an ending point, and indicate their respective users to proceed towards the candidate location modified by the second terminal.

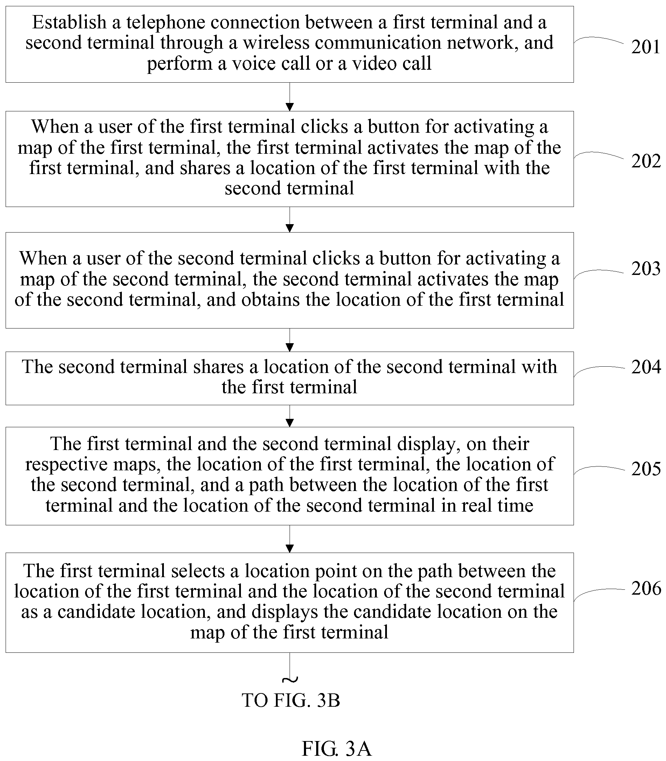

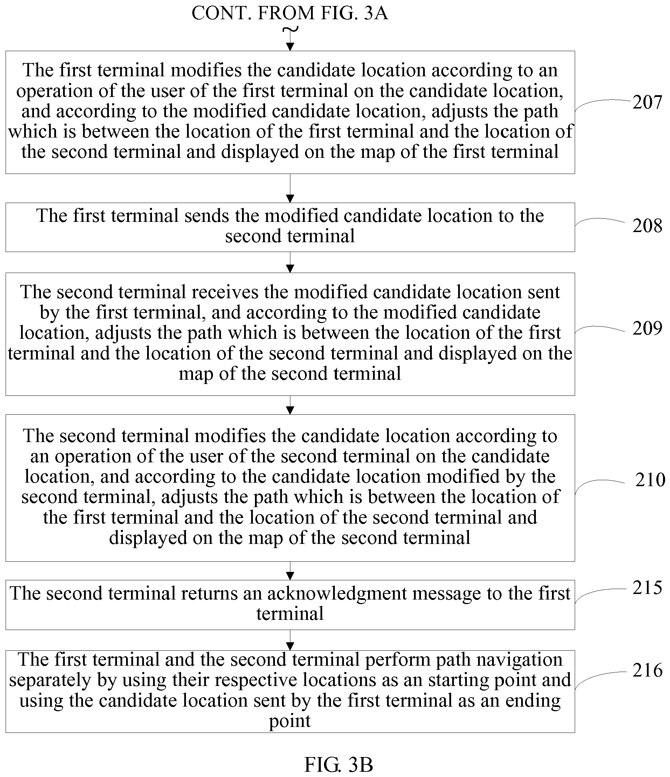

Optionally, as shown in FIG. 3, if the second terminal does not modify the candidate location, step 210 to step 214 may be replaced with step 215, which is that: returning, by the second terminal, an acknowledgment message to the first terminal, where the acknowledgment message returned by the second terminal indicates that the second terminal accepts the candidate location sent by the first terminal, and does not modify the candidate location any more; and step 216, which is that: performing, by the first terminal and the second terminal, path navigation separately by using their respective locations as a starting point and using the candidate location sent by the first terminal as an ending point, and indicating their respective users to proceed towards the candidate location sent by the first terminal. In the FIG. 3, step 207 is also an optional step, and the candidate location sent by the first terminal may include: the modified candidate location sent by the first terminal, or, the candidate location which is selected by the first terminal on the path between the location of the first terminal and the location of the second terminal and sent by the first terminal.

Optionally, after the first terminal and the second terminal start the path navigation in step 214 or step 216, the method for sharing a terminal location may further include: according to an operation of the user, disconnecting, by the first terminal, the telephone connection established with the second terminal through the wireless communication network; or, when the first terminal and the second terminal start the path navigation, automatically disconnecting, by the first terminal, the telephone connection established with the second terminal through the wireless communication network. In addition, when the user of the first terminal clicks the button for activating the map of the first terminal, the first terminal may automatically switch to a hands-free mode to perform the voice call by using a loudspeaker, thereby facilitating the user of the first terminal to perform the voice call or the video call at the same time when the first terminal executes step 201 to step 214 (as shown in FIG. 2) or executes step 201 to step 215 (as shown in FIG. 3). Similarly, when the user of the second terminal clicks the button for activating the map of the second terminal, the second terminal may also automatically switch to a hands-free mode to perform the voice call by using a loudspeaker, thereby facilitating the user of the second terminal to perform the voice call or the video call at the same time when the second terminal executes subsequent steps.

In the embodiment of the present invention, the first terminal determines the candidate location, and notifies the second terminal of the candidate location, the first terminal and the second terminal display the location of the first terminal, the location of the second terminal and the candidate location synchronously on their respective maps, and the candidate location can be modified by the second terminal. Because the first terminal and the second terminal synchronously display the location of the first terminal, the location of the second terminal and the candidate location on their respective maps, when the candidate location is modified by the first terminal and/or the second terminal, the modified candidate location can be synchronously displayed on the respective maps of the first terminal and the second terminal, thereby providing an intercommunication manner of synchronously displaying an editable location on multiple terminals, implementing sharing of an agreed candidate location between terminals, increasing communication efficiency between terminal users, and facilitating negotiation and determination of the terminal users for a meeting site.

### Embodiment 3

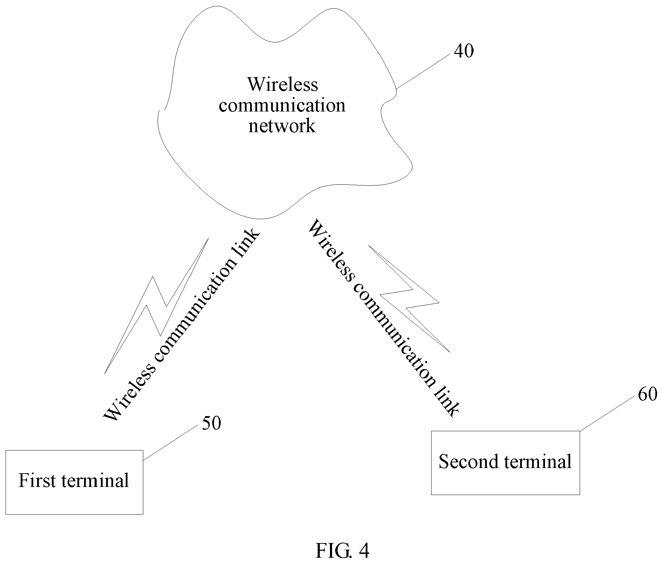

As shown in FIG. 4, an embodiment of the present invention provides a communication system, including: a wireless communication network 40, a first terminal 50, and a second terminal 60; where a telephone connection may be established between the first terminal 50 and the second terminal 60 through the wireless communication network 40, and a voice call or a video call is performed. In addition, data transmission may also be performed between the first terminal 50 and the second terminal 60 through the wireless communication network 40 or another network.

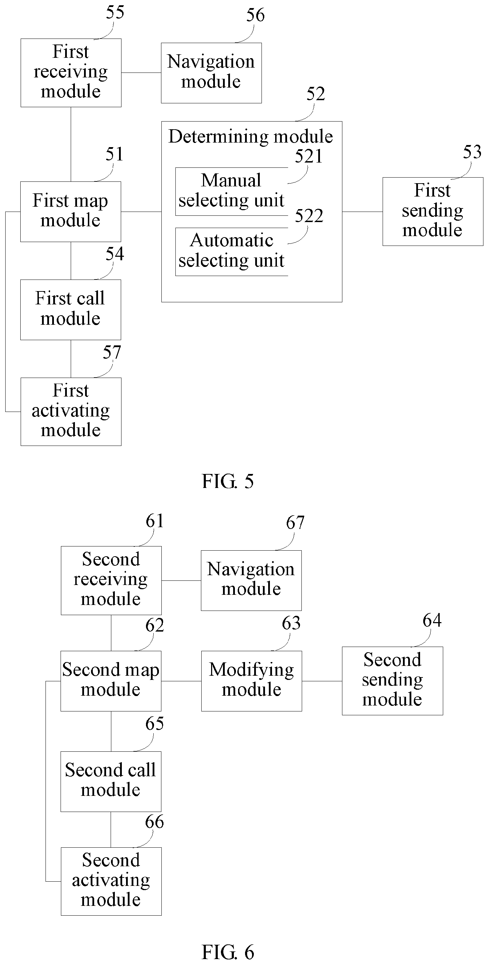

As shown in FIG. 5, FIG. 5 provides a structural block diagram of the first terminal 50 as an example, and the first terminal 50 includes the following modules:
a first map module 51, configured to display a location of the first terminal and a location of the second terminal on a map of the first terminal in real time; and display a candidate location on the map of the first terminal;
a determining module 52, configured to determine the candidate location, and notify the first map module of the candidate location; and
a first sending module 53, configured to notify the second terminal of the candidate location determined by the determining module 52, so that the candidate location is also displayed on a map of the second terminal, and the candidate location can be modified by the second terminal.

Optionally, the first terminal 50 may further include: a first call module 54 and a first activating module 57. The first call module 54 is configured to establish the telephone connection between the first terminal and the second terminal through the wireless communication network, and perform the voice call or the video call; and/or, disconnect the telephone connection between the first terminal and the second terminal; where a voice call interface of the first terminal includes a button for activating the map of the first terminal. The first activating module 57 is configured to, when a user of the first terminal clicks the button for activating the map of the first terminal, activate the map of the first terminal.

Optionally, the first map module 51 is further configured to: on the map of the first terminal, display a path from the location of the first terminal to the candidate location; or, on the map of the first terminal, display a path from the location of the first terminal to the candidate location, and a path from the location of the second terminal to the candidate location; or, on the map of the first terminal, display a path from the location of the first terminal to the location of the second terminal.

Optionally, the first map module 51 is further configured to: on the map of the first terminal, display a path between the location of the first terminal and the location of the second terminal; and if the path between the location of the first terminal and the location of the second terminal does not pass through the candidate location, adjust the path between the location of the first terminal and the location of the second terminal, so that the adjusted path between the location of the first terminal and the location of the second terminal passes through the candidate location.

Optionally, the determining module 52 includes: a manual selecting unit 521, configured to receive a coordinate point input by the user, and use the coordinate point input by the user as the candidate location, where the coordinate point includes a geographic coordinate value input by the user or a point selected by the user on the map; and/or, an automatic selecting unit 522, configured to select a location point on the path between the location of the first terminal and the location of the second terminal, where the location point includes a middle point of the path between the location of the first terminal and the location of the second terminal, or any point of the path between the location of the first terminal and the location of the second terminal, or a meeting point which is determined according to moving speeds of the first terminal and the second terminal and of the first terminal and the second terminal when moving in the current speeds.

Optionally, the first terminal 50 may further include: a first receiving module 55, configured to the location which is of the second terminal and sent by the second terminal or a server, and notify the first map module 51 of the location of the second terminal; and receive an acknowledgment message returned by the second terminal, where the acknowledgment message indicates that the second terminal accepts the candidate location, and does not modify the candidate location any more; and a navigation module 56, configured to set the candidate location to a destination address to perform path navigation.

Optionally, the first receiving module 55 is further configured to receive a modified candidate location returned by the second terminal. In this case, the first map module 51 is further configured to display the modified candidate location on the map of the first terminal.

As shown in FIG. 6, FIG. 6 provides a structural block diagram of the second terminal 60 as an example, and the second terminal 60 includes the following modules:
- a second receiving module 61, configured to receive the candidate location sent by the first terminal;
- a second map module 62, configured to display, on the map of the second terminal, the location of the first terminal and the location of the second terminal in real time; and display, on the map of the second terminal, the candidate location or the modified candidate location;
- a modifying module 63, configured to modify the candidate location, and notify the second map module 62 of the modified candidate location; and
- a second sending module 64, configured to send the modified candidate location to the first terminal, so that the modified candidate location is also displayed on the map of the first terminal.

Optionally, the second terminal 60 may further include: a second call module 65, configured to establish a telephone connection between the second terminal and the first terminal through a wireless communication network, and perform a voice call or a video call, where a voice call interface of the second terminal includes a button for activating the map of the second terminal; and a second activating module 66, configured to, when a user of the second terminal clicks the button for activating the map of the second terminal, activate the map of the second terminal. Optionally, the second sending module 64 is further configured to: after the second terminal receives an instruction that the user agrees to share the location of the second terminal, directly send the location of the second terminal to the first terminal; or, after the second terminal receives an instruction that the user agrees to share the location of the second terminal, notify the server that the server should send the location of the second terminal to the first terminal. Optionally, the second map module 62 is further configured to: on the map of the second terminal, display a path from the location of the second terminal to the candidate location or the modified candidate location; or, on the map of the second terminal, display a path from the location of the second terminal to the candidate location or the modified candidate location, and a path from the location of the first terminal to the candidate location or the modified candidate location; or, on the map of the second terminal, display a path from the location of the second terminal to the location of the first terminal.

Optionally, the second map module 62 is further configured to: on the map of the second terminal, display a path between the location of the first terminal and the location of the second terminal; and if the path between the location of the first terminal and the location of the second terminal does not pass through the candidate location or the modified candidate location, adjust the path between the location of the first terminal and the location of the second terminal, so that the adjusted path between the location of the first terminal and the location of the second terminal passes through the candidate location or the modified candidate location.

Optionally, the second receiving module 61 is further configured to receive an acknowledgment message returned by the first terminal, where the acknowledgment message indicates that the first terminal accepts the modified candidate location, and does not modify the modified candidate location any more. In this case, the second terminal further includes: a navigation module 67, configured to set the modified candidate location to a destination address to perform path navigation.

Optionally, the second receiving module 61 is further configured to receive a candidate location that is further modified and returned by the first terminal; and the second map module 62 is further configured to display, on the map of the second terminal, the candidate location that is further modified.

The first terminal 50 and/or the second terminal 60 provided in the embodiment of the present invention may be a mobile phone, an electronic book, a navigator, a personal digital assistant (PDA, personal digital assistant), a PC (personal computer), a palm computer, a man-machine interactive terminal or another terminal device having a display function. In the embodiment of the present invention, when the first terminal 50 or the second terminal 60 is a mobile phone, the mobile phone may further include: a shell, a circuit board, a processor, a touch screen, a radio frequency circuit, a microphone, a loudspeaker, and a power source; the touch screen is mounted on the shell, the circuit board is mounted inside a space enclosed by the shell, the processor and the radio frequency circuit are disposed on the circuit board; the processor include all or part of the foregoing modules or units. The processor is configured to perform processing on data input through the touch screen or an infrared proximity sensor, and/or output a result of the processed data through the touch screen. The radio frequency circuit is configured to establish communication between the mobile phone and a wireless network, and implement data receiving and sending of the mobile phone and the wireless network. The microphone is configured to capture a sound and convert the captured sound into sound data, so that the mobile phone sends the sound data to the wireless network through the radio frequency circuit. The loudspeaker is configured to restore the sound data received by the mobile phone from the wireless network through the radio frequency circuit to the sound, and play the sound to the user. The power source is configured to supply power to various circuits or components of the mobile phone. Definitely, various modules and units of the first terminal 50 and the second terminal 60 may also be disposed in a same terminal device, that is, a terminal device including all or part of the various modules and units included in the first terminal 50 and the second terminal 60 may exist.

It should be noted that, for specific implementation of operations executed by the various modules or units in the terminal device in the embodiment, reference may be made to the related content in the method embodiments, and details are not repeatedly described here.

In the embodiment of the present invention, the first terminal determines the candidate location, and notifies the second terminal of the candidate location, the first terminal and the second terminal display the location of the first terminal, the location of the second terminal and the candidate location synchronously on their respective maps, and the candidate location can be modified by the second terminal. Because the first terminal and the second terminal synchronously display the location of the first terminal, the location of the second terminal and the candidate location on their respective maps, when the candidate location is modified by the first terminal and/or the second terminal, the modified candidate location can be synchronously displayed on the respective maps of the first terminal and the second terminal, thereby providing an intercommunication manner of synchronously displaying an editable location on multiple terminals, implementing sharing of an agreed candidate location between terminals, increasing communication efficiency between terminal users, and facilitating negotiation and determination of the terminal users for a meeting site.

It should be noted that, in the foregoing method and the mobile terminal embodiments, the various included modules or units are only divided according to functional logic, but the embodiments are not limited to the foregoing division, as long as a corresponding function can be implemented; in addition, specific names of the various functional modules or functional units are only used for distinguishing, and are not intended to limit the protection scope of the present invention.

It should be further understood that, although terms such as first and second may be used to describe various elements or data, the elements or the data are not limited by the terms. The terms are only used for distinguishing the elements or the data. For example, without departing from the scope of the present invention, the first terminal may also be referred to as a second terminal, and similarly, the second terminal may also be referred to as a first terminal.

Persons of ordinary skill in the art should understand that all or part of the procedures of the methods in the foregoing embodiments may be implemented by a computer program instructing relevant hardware. The program may be stored in a computer readable storage medium. When the program runs, the procedures of the methods in the foregoing embodiments are performed. The storage medium may be a magnetic disk, an optical disk, a read-only memory (Read-Only Memory, ROM), or a random access memory (Random Access Memory, RAM), and so on. In addition, all or part of the procedures in the methods of the foregoing embodiments may also be executed by a processor in a terminal device, which is not further described here.

To sum up, the foregoing descriptions are merely exemplary embodiments of the present invention, but not intended to limit the present invention.

## Claims

1. A method for sharing a terminal location, comprising:
displaying, by a second terminal, a location of a first terminal and a location of the second terminal on a map of the second terminal in real time;
receiving, by the second terminal, a candidate location sent by the first terminal;
displaying, by the second terminal, the candidate location on the map of the second terminal, and modifying the candidate location; and
sending, by the second terminal, the modified candidate location to the first terminal, so that the modified candidate location is also displayed on a map of the first terminal.

2. The method according to claim 1, wherein before the displaying, by the second terminal, the location of the first terminal and the location of the second terminal on the map of the second terminal in real time, the method further comprises:
establishing a telephone connection between the second terminal and the first terminal through a wireless communication network, and performing a voice call or a video call; wherein a voice call interface of the second terminal comprises a button for activating the map of the second terminal; and
when a user of the second terminal clicks the button for activating the map of the second terminal, activating, by the second terminal, the map of the second terminal.

3. The method according to claim 1, wherein after the displaying, by the second terminal, the location of the first terminal and the location of the second terminal on the map of the second terminal in real time, the method further comprises:
after the second terminal receives an instruction that the user agrees to share the location of the second terminal, sending, by the second terminal, the location of the second terminal directly to the first terminal; or,
after the second terminal receives an instruction that the user agrees to share the location of the second terminal, notifying, by the second terminal, a server that the server should send the location of the second terminal to the first terminal.

4. The method according to any one of claims 1 to 3, wherein after the displaying, by the second terminal, the candidate location on the map of the second terminal, the method further comprises:
on the map of the second terminal, displaying a path from the location of the second terminal to the candidate location; or,
on the map of the second terminal, displaying a path from the location of the second terminal to the candidate location, and a path from the location of the first terminal to the candidate location; or,
on the map of the second terminal, displaying a path from the location of the second terminal to the location of the first terminal.

5. The method according to any one of claims 1 to 4, wherein after the displaying, by the second terminal, the location of the first terminal and the location of the second terminal on the map of the second terminal in real time, the method further comprises:
on the map of the second terminal, displaying a path between the location of the first terminal and the location of the second terminal.

6. The method according to claim 5, wherein after the displaying, by the second terminal, the candidate location on the map of the second terminal, the method further comprises:
if the path between the location of the first terminal and the location of the second terminal does not pass through the candidate location, adjusting the path between the location of the first terminal and the location of the second terminal, so that the adjusted path between the location of the first terminal and the location of the second terminal passes through the candidate location.

7. The method according to any one of claims 1 to 6, wherein after the sending, by the second terminal, the modified candidate location to the first terminal, the method further comprises:
receiving, by the second terminal, an acknowledgment message returned by the first terminal, wherein the acknowledgment message indicates that the first terminal accepts the modified candidate location, and does not modify the modified candidate location any more; and setting, by the second terminal, the modified candidate location to a destination address to perform path navigation; or
receiving, by the second terminal, a candidate location that is further modified and returned by the first terminal; and displaying, by the second terminal and on the map of the second terminal, the candidate location that is further modified.

8. A terminal device, comprising:
a receiving module, configured to receive a candidate location sent by a first terminal;
a map module, configured to display a location of the first terminal and a location of the terminal device on a map of the terminal device in real time; and display the candidate location or a modified candidate location on the map of the terminal device;
a modifying module, configured to modify the candidate location, and notify the map module of the modified candidate location; and
a sending module, configured to send the modified candidate location to the first terminal, so that the modified candidate location is also displayed on a map of the first terminal.

9. The terminal device according to claim 8, wherein the terminal device further comprises:
a call module, configured to establish a telephone connection between the terminal device and the first terminal through a wireless communication network, and perform a voice call or a video call; wherein a voice call interface of the terminal device comprises a button for activating the map of the terminal device; and
an activating module, configured to, when a user of the terminal device clicks the button for activating the map of the terminal device, activate the map of the terminal device.

10. The terminal device according to claim 8 or 9, wherein the sending module is further configured to: after the terminal device receives an instruction that the user agrees to share the location of the terminal device, send the location of the terminal device directly to the first terminal; or, after the terminal device receives an instruction that the user agrees to share the location of the terminal device, notify a server that the server should send the location of the terminal device to the first terminal.

11. The terminal device according to any one of claims 8 to 10, wherein the map module is further configured to: on the map of the terminal device, display a path from the location of the terminal device to the candidate location or the modified candidate location; or, on the map of the terminal device, display a path from the location of the terminal device to the candidate location or the modified candidate location, and a path from the location of the first terminal to the candidate location or the modified candidate location; or, on the map of the terminal device, display a path from the location of the terminal device to the location of the first terminal.

12. The terminal device according to any one of claims 8 to 10, wherein the map module is further configured to: on the map of the terminal device, display a path between the location of the first terminal and the location of the terminal device; and if the path between the location of the first terminal and the location of the terminal device does not pass through the candidate location or the modified candidate location, adjust the path between the location of the first terminal and the location of the terminal device, so that the adjusted path between the location of the first terminal and the location of the terminal device passes through the candidate location or the modified candidate location.

13. The terminal device according to any one of claims 8 to 11, wherein,
the receiving module is further configured to receive an acknowledgment message returned by the first terminal, wherein the acknowledgment message indicates that the first terminal accepts the modified candidate location and does not modify the modified candidate location any more; and
the terminal device further comprises: a navigation module, configured to set the modified candidate location to a destination address to perform path navigation.

14. The terminal device according to any one of claims 8 to 11, wherein,
the receiving module is further configured to receive a candidate location that is further modified and returned by the first terminal; and
the map module is further configured to display, on the map of the terminal device, the candidate location that is further modified.

15. The terminal device according to any one of claims 8 to 14, wherein the terminal device is a mobile phone; and the mobile phone further comprises: a shell, a circuit board, a processor, a touch screen, a radio frequency circuit, a microphone, a loudspeaker, and a power source;
the touch screen is mounted on the shell, the circuit board is mounted inside a space enclosed by the shell, and the processor and the radio frequency circuit is disposed on the circuit board;
the processor comprises all or part of the foregoing modules and units; the processor is configured to perform processing on data input through the touch screen, and/or output a result of the processed data through the touch screen;
the radio frequency circuit is configured to establish communication between the mobile phone and a wireless network and implement receiving and sending of data between the mobile phone and the wireless network;
the microphone is configured to capture a sound and convert the captured sound into sound data, so that the mobile phone sends the sound data to the wireless network through the radio frequency circuit;
the loudspeaker is configured to restore the sound data received by the mobile phone from the wireless network through the radio frequency circuit to the sound and play the sound to a user; and
the power source is configured to supply power to various circuits or components of the mobile phone.

## Patentansprüche

1. Verfahren zur gemeinsamen Nutzung eines Endgerätestandorts, das die folgenden Schritte aufweist:
Anzeigen durch ein zweites Endgerät eines Standorts eines ersten Endgeräts und eines Standorts des zweiten Endgeräts auf einer Karte des zweiten Endgeräts in Echtzeit;
Empfangen durch das zweite Endgerät eines Kandidatenstandorts, der durch das erste Endgerät zurückgeschickt wird;
Anzeigen durch das zweite Endgerät des Kandidatenstandorts auf der Karte des zweiten Endgeräts und Modifizieren des Kandidatenstandorts; und
Senden durch das zweite Endgerät des modifizierten Kandidatenstandorts zum ersten Endgerät, so dass der modifizierte Kandidatenstandort auch auf einer Karte des ersten Endgeräts angezeigt wird.

2. Verfahren nach Anspruch 1, wobei vor dem Anzeigen durch das zweite Endgerät des Standorts des ersten Endgeräts und des Standorts des zweiten Endgeräts auf der Karte des zweiten Endgeräts in Echtzeit, das Verfahren ferner aufweist:
Aufbauen einer Telefonverbindung zwischen dem zweiten Endgerät und dem ersten Endgerät durch ein drahtloses Kommunikationsnetzwerk, und Durchführen eines Sprachanrufs oder eines Videoanrufs; wobei eine Sprachanruf-Schnittstelle des zweiten Endgeräts eine Schaltfläche zum Aktivieren der Karte des zweiten Endgeräts aufweist; und
wenn ein Benutzer des zweiten Endgeräts die Schaltfläche zum Aktivieren der Karte des zweiten Endgeräts anklickt, Aktivieren durch das zweite Endgerät der Karte des zweiten Endgeräts.

3. Verfahren nach Anspruch 1, wobei nach dem Anzeigen durch das zweite Endgerät des Standorts des ersten Endgeräts und des Standorts des zweiten Endgeräts auf der Karte des zweiten Endgeräts in Echtzeit das Verfahren ferner aufweist:
nachdem das zweite Endgerät eine Anweisung empfängt, dass der Benutzer damit einverstanden ist, den Standort des zweiten Endgeräts zu teilen, Senden des Standorts des zweiten Endgeräts durch das zweite Endgerät direkt zum ersten Endgerät; oder
nachdem das zweite Endgerät eine Anweisung empfängt, dass der Benutzer damit einverstanden ist, den Standort des zweiten Endgeräts zu teilen, Benachrichtigen eines Servers durch das zweite Endgerät, dass der Server den Standort des zweiten Endgeräts zum ersten Endgerät senden soll.

4. Verfahren nach einem der Ansprüche 1 bis 3, wobei nach dem Anzeigen durch das zweite Endgerät des Kandidatenstandorts auf der Karte des zweiten Endgeräts das Verfahren ferner aufweist:
auf der Karte des zweiten Endgeräts Anzeigen eines Wegs vom Standort des zweiten Endgeräts zum Kandidatenstandort; oder
auf der Karte des zweiten Endgeräts Anzeigen eines Wegs vom Standort des zweiten Endgeräts zum Kandidatenstandort, und eines Wegs vom Standort des ersten Endgeräts zum Kandidatenstandort; oder
auf der Karte des zweiten Endgeräts Anzeigen eines Wegs vom Standort des zweiten Endgeräts zum Standort des ersten Endgeräts.

5. Verfahren nach einem der Ansprüche 1 bis 4, wobei nach dem Anzeigen durch das zweite Endgerät des Standorts des ersten Endgeräts und des Standorts des zweiten Endgeräts auf der Karte des zweiten Endgeräts in Echtzeit, das Verfahren ferner aufweist:
auf der Karte des zweiten Endgeräts Anzeigen eines Wegs zwischen dem Standort des ersten Endgeräts und dem Standort des zweiten Endgeräts.

6. Verfahren nach Anspruch 5, wobei nach dem Anzeigen durch das zweite Endgerät des Kandidatenstandorts auf der Karte des zweiten Endgeräts das Verfahren ferner aufweist:
wenn der Weg zwischen dem Standort des ersten Endgeräts und dem Standort des zweiten Endgeräts nicht durch den Kandidatenstandort geht, Anpassen des Wegs zwischen dem Standort des ersten Endgeräts und dem Standort des zweiten Endgeräts, so dass der angepasste Weg zwischen dem Standort des ersten Endgeräts und dem Standort des zweiten Endgeräts durch den Kandidatenstandort geht.

7. Verfahren nach einem der Ansprüche 1 bis 6, wobei nach dem Senden durch das zweite Endgerät des modifizierten Kandidatenstandorts zum ersten Endgerät das Verfahren ferner aufweist:
Empfangen durch das zweite Endgerät einer Bestätigungsnachricht, die durch das erste Endgerät zurückgeschickt wird, wobei die Bestätigungsnachricht anzeigt, dass das erste Endgerät den modifizierten Kandidatenstandort akzeptiert und den modifizierten Kandidatenstandort nicht mehr modifiziert; und Einstellen durch das zweite Endgerät des modifizierten Kandidatenstandorts auf eine Zieladresse, um eine Wegnavigation durchzuführen; oder
Empfangen eines Kandidatenstandorts durch das zweite Endgerät, der weiterhin modifiziert und durch das erste Endgerät zurückgegeben wird; und Anzeigen des Kandidatenstandorts, der weiterhin modifiziert wird, durch das zweite Endgerät auf der Karte des zweiten Endgeräts.

8. Endgerätevorrichtung, die Folgendes aufweist:
ein Empfangsmodul, das konfiguriert ist, einen durch ein erstes Endgerät gesendeten Kandidatenstandort zu empfangen;
ein Kartenmodul, das konfiguriert ist, einen Standort des ersten Endgeräts und einen Standort der Endgerätevorrichtung auf einer Karte der Endgerätevorrichtung in Echtzeit anzuzeigen; und den Kandidatenstandort oder einen modifizierten Kandidatenstandort auf der Karte der Endgerätevorrichtung anzuzeigen;
ein Modifizierungsmodul, das konfiguriert ist, den Kandidatenstandort zu modifizieren und das Kartenmodul vom modifizierten Kandidatenstandort zu benachrichtigen; und
ein Sendemodul, das konfiguriert ist, den modifizierten Kandidatenstandort zum ersten Endgerät zu senden, so dass der modifizierte Kandidatenstandort auch auf einer Karte des ersten Endgeräts angezeigt wird.

9. Endgerätevorrichtung nach Anspruch 8, wobei die Endgerätevorrichtung ferner aufweist:
ein Anrufmodul, das konfiguriert ist, eine Telefonverbindung zwischen der Endgerätevorrichtung und dem ersten Endgerät durch ein drahtloses Kommunikationsnetzwerk aufzubauen und einen Sprachanruf oder einen Videoanruf durchzuführen; wobei eine Sprachanruf-Schnittstelle der Endgerätevorrichtung eine Schaltfläche zum Aktivieren der Karte der Endgerätevorrichtung aufweist; und
ein Einschaltmodul, das konfiguriert ist, wenn ein Benutzer der Endgerätevorrichtung die Schaltfläche zum Aktivieren der Karte der Endgerätevorrichtung anklickt, die Karte der Endgerätevorrichtung zu aktivieren.

10. Endgerätevorrichtung nach Anspruch 8 oder 9, wobei das Sendemodul ferner für Folgendes konfiguriert ist: nachdem die Endgerätevorrichtung eine Anweisung empfängt, dass der Benutzer damit einverstanden ist, den Standort der Endgerätevorrichtung zu teilen, Senden des Standorts der Endgerätevorrichtung direkt zum ersten Endgerät; oder nachdem die Endgerätevorrichtung eine Anweisung empfängt, dass der Benutzer damit einverstanden ist, den Standort der Endgerätevorrichtung zu teilen, Benachrichtigen eines Servers, dass der Server den Standort der Endgerätevorrichtung zum ersten Endgerät senden soll.

11. Endgerätevorrichtung nach einem der Ansprüche 8 bis 10, wobei das Kartenmodul ferner konfiguriert ist, auf der Karte der Endgerätevorrichtung einen Weg vom Standort der Endgerätevorrichtung zum Kandidatenstandort oder zum modifizierten Kandidatenstandort anzuzeigen; oder auf der Karte der Endgerätevorrichtung einen Weg vom Standort der Endgerätevorrichtung zum Kandidatenstandort oder zum modifizierten Kandidatenstandort und einen Weg vom Standort des ersten Endgeräts zum Kandidatenstandort oder zum modifizierten Kandidatenstandort anzuzeigen; oder auf der Karte der Endgerätevorrichtung einen Weg vom Standort der Endgerätevorrichtung zum Standort des ersten Endgeräts anzuzeigen.

12. Endgerätevorrichtung nach einem der Ansprüche 8 bis 10, wobei das Kartenmodul ferner konfiguriert ist, auf der Karte der Endgerätevorrichtung einen Weg zwischen dem Standort des ersten Endgeräts und dem Standort der Endgerätevorrichtung anzuzeigen; und wenn der Weg zwischen dem Standort des ersten Endgeräts und dem Standort der Endgerätevorrichtung nicht durch den Kandidatenstandort oder den modifizierten Kandidatenstandort geht, den Weg zwischen dem Standort des ersten Endgeräts und dem Standort der Endgerätevorrichtung anzupassen, so dass der angepasste Weg zwischen dem Standort des ersten Endgeräts und dem Standort der Endgerätevorrichtung durch den Kandidatenstandort oder den modifizierten Kandidatenstandort geht.

13. Endgerätevorrichtung nach einem der Ansprüche 8 bis 11, wobei das Empfangsmodul ferner konfiguriert ist, eine Bestätigungsnachricht zu empfangen, die durch das erste Endgerät zurückgeschickt wird, wobei die Bestätigungsnachricht anzeigt, dass das erste Endgerät den modifizierten Kandidatenstandort akzeptiert und den modifizierten Kandidatenstandort nicht mehr modifiziert; und
die Endgerätevorrichtung ferner aufweist: ein Navigationsmodul, das konfiguriert ist, den modifizierten Kandidatenstandort auf eine Zieladresse einzustellen, um eine Wegnavigation durchzuführen.

14. Endgerätevorrichtung nach einem der Ansprüche 8 bis 11, wobei das Empfangsmodul ferner konfiguriert ist, einen Kandidatenstandort, der weiterhin modifiziert wird und durch das erste Endgerät zurückgegeben wird, zu empfangen;
und
das Kartenmodul ferner konfiguriert ist, den Kandidatenstandort, der weiterhin modifiziert wird, auf der Karte der Endgerätevorrichtung anzuzeigen.

15. Endgerätevorrichtung nach einem der Ansprüche 8 bis 14, wobei die Endgerätevorrichtung ein Mobiltelefon ist; und das Mobiltelefon ferner Folgendes umfasst: ein Gehäuse, eine Leiterplatte, einen Prozessor, einen Touchscreen, eine Hochfrequenzschaltung, ein Mikrofon, einen Lautsprecher und eine Stromquelle; der Touchscreen an dem Gehäuse angebracht ist, die Leiterplatte in einem durch das Gehäuse eingeschlossenen Raum angebracht ist und der Prozessor und die Hochfrequenzschaltung auf der Leiterplatte angebracht sind;
der Prozessor die obigen Module und Einheiten alle oder teilweise umfasst; der Prozessor konfiguriert ist, Verarbeitung an Dateneingaben mittels des Touchscreens auszuführen und/oder ein Ergebnis der verarbeiteten Daten mittels des Touchscreens auszugeben;
die Hochfrequenzschaltung konfiguriert ist, Kommunikation zwischen dem Mobiltelefon und einem drahtlosen Netzwerk herzustellen und das Empfangen und
Senden von Daten zwischen dem Mobiltelefon und dem drahtlosen Netzwerk zu implementieren;
das Mikrofon konfiguriert ist, einen Ton zu erfassen und den erfassten Ton in Tondaten umzusetzen, so dass das Mobiltelefon die Tondaten mittels der Hochfrequenzschaltung zum drahtlosen Netzwerk sendet;
der Lautsprecher konfiguriert ist, die durch das Mobiltelefon von dem drahtlosen Netzwerk mittels der Hochfrequenzschaltung empfangenen Tondaten wieder in Ton zu verwandeln und den Ton einem Benutzer wiederzugeben; und
die Stromquelle konfiguriert ist, verschiedene Schaltungen oder Komponenten des Mobiltelefons mit Strom zu versorgen.

## Revendications

1. Procédé pour partager une position d'un terminal, le procédé comprenant les étapes consistant à :
afficher, par un deuxième terminal, en temps réel, une position d'un premier terminal et une position du deuxième terminal sur une carte du deuxième terminal ;
recevoir, par le deuxième terminal, une position candidate renvoyée par le premier terminal ;
afficher, par le deuxième terminal, la position candidate sur la carte du deuxième terminal, et modifier la position candidate ; et
envoyer, par le deuxième terminal, la position candidate modifiée au premier terminal de façon à afficher également la position candidate modifiée sur une carte du premier terminal.

2. Procédé selon la revendication 1, comprenant en outre, préalablement à l'affichage, par le deuxième terminal, en temps réel, de la position du premier terminal et la position du deuxième terminal sur la carte du deuxième terminal, les étapes consistant à :
établir une liaison téléphonique entre le deuxième terminal et le premier terminal par le biais d'un réseau de communication sans fil, et effectuer un appel vocal ou un appel vidéo ; une interface d'appel vocal du deuxième terminal comprenant un bouton servant à activer la carte du deuxième terminal ; et
lorsqu'un utilisateur du deuxième terminal clique sur le bouton servant à activer la carte du deuxième terminal, activer, par le deuxième terminal, la carte du deuxième terminal.

3. Procédé selon la revendication 1, comprenant en outre, suite à l'affichage, par le deuxième terminal, en temps réel, de la position du premier terminal et la position du deuxième terminal sur la carte du deuxième terminal, les étapes consistant à :
une fois que le deuxième terminal a reçu une instruction indiquant que l'utilisateur accepte de partager la position du deuxième terminal, envoyer avec le deuxième terminal l'emplacement du deuxième terminal directement au premier terminal ; ou
une fois que le deuxième terminal a reçu une instruction indiquant que l'utilisateur accepte de partager la position du deuxième terminal, indiquer à un serveur, avec le deuxième terminal, que le serveur doit envoyer l'emplacement du deuxième terminal au premier terminal.

4. Procédé selon l'une quelconque des revendications 1 à 3, comprenant en outre, suite à l'affichage, par le deuxième terminal, de la position candidate sur la carte du deuxième terminal, l'étape consistant à :
sur la carte du deuxième terminal, afficher un trajet depuis la position du deuxième terminal jusqu'à la position candidate ; ou,
sur la carte du deuxième terminal, afficher un trajet depuis la position du deuxième terminal jusqu'à la position candidate et un trajet depuis la position du premier terminal jusqu'à la position candidate ; ou,
sur la carte du deuxième terminal, afficher un trajet depuis la position du deuxième terminal jusqu'à la position du premier terminal.

5. Procédé selon l'une quelconque des revendications 1 à 4, comprenant en outre, suite à l'affichage, par le deuxième terminal, en temps réel, de la position du premier terminal et la position du deuxième terminal sur la carte du deuxième terminal, l'étape consistant à :
sur la carte du deuxième terminal, afficher un trajet entre la position du premier terminal et la position du deuxième terminal.

6. Procédé selon la revendication 5, comprenant en outre, suite à l'affichage, par le deuxième terminal, de la position candidate sur la carte du deuxième terminal, l'étape consistant à :
si le trajet entre la position du premier terminal et la position du deuxième terminal ne passe pas par la position candidate, rectifier le trajet entre la position du premier terminal et la position du deuxième terminal pour faire en sorte que le trajet rectifié entre la position du premier terminal et la position du deuxième terminal passe par la position candidate.

7. Procédé selon l'une quelconque des revendications 1 à 6, lequel consiste à, après l'envoi, par le deuxième terminal, de la position candidate modifiée au premier terminal :
recevoir, par le deuxième terminal, un message d'accusé de réception renvoyé par le premier terminal, le message d'accusé de réception indiquant que le premier terminal accepte la position candidate modifiée et qu'il n'apportera plus aucune modification à la position candidate modifiée ; et définir, par le deuxième terminal, la position candidate modifiée comme une adresse de destination pour procéder à une navigation le long du trajet ; ou
recevoir avec le deuxième terminal une position candidate qui est encore modifiée et renvoyée par le premier terminal, et afficher avec le deuxième terminal et sur la carte du deuxième terminal, la position candidate qui a encore été modifiée.

8. Dispositif terminal, comprenant:
un module de réception conçu pour recevoir une position candidate envoyée par le premier terminal ;
un module de carte, configuré pour afficher, en temps réel, une position du premier terminal et une position du dispositif terminal sur une carte du dispositif terminal ; et afficher la position candidate ou une position candidate modifiée sur la carte du dispositif terminal ;
un module de modification, configuré pour modifier la position candidate, et notifier la position candidate modifiée au module de carte ; et
un module d'envoi, configuré pour envoyer la position candidate modifiée au premier terminal, de façon à afficher également la position candidate modifiée sur une carte du premier terminal.

9. Dispositif terminal selon la revendication 8, comprenant en outre :
un module d'appel, configuré pour établir une liaison téléphonique entre le dispositif terminal et le premier terminal par le biais d'un réseau de communication sans fil, et effectuer un appel vocal ou un appel vidéo ; une interface d'appel vocal du dispositif terminal comprenant un bouton servant à activer la carte du dispositif terminal ; et
un module d'activation, configuré, lorsqu'un utilisateur du dispositif terminal clique sur le bouton servant à activer la carte du dispositif terminal, pour activer la carte du dispositif terminal.

10. Dispositif terminal selon les revendications 8 ou 9, dans lequel le module d'envoi est en outre conçu pour : une fois que le dispositif terminal a reçu une instruction indiquant que l'utilisateur accepte de partager la position du dispositif terminal, envoyer l'emplacement du dispositif terminal directement au premier terminal ; ou une fois que le dispositif terminal a reçu une instruction indiquant que l'utilisateur accepte de partager la position du dispositif terminal, indiquer à un serveur que le serveur doit envoyer la position du dispositif terminal au premier terminal.

11. Dispositif terminal selon l'une quelconque des revendications 8 à 10, dans lequel le module de carte est configuré en outre pour : sur la carte du dispositif terminal, afficher un trajet depuis la position du dispositif terminal jusqu'à la position candidate ou la position candidate modifiée ; ou, sur la carte du dispositif terminal, afficher un trajet depuis la position du dispositif terminal jusqu'à la position candidate ou la position candidate modifiée et un trajet depuis la position du premier terminal jusqu'à la position candidate ou la position candidate modifiée ; ou, sur la carte du dispositif terminal, afficher un trajet depuis la position du dispositif terminal jusqu'à la position du premier terminal.

12. Dispositif terminal selon l'une quelconque des revendications 8 à 10, dans lequel le module de carte est configuré en outre pour : sur la carte du dispositif terminal, afficher un trajet entre la position du premier terminal et la position du dispositif terminal ; et, si le trajet entre la position du premier terminal et la position du dispositif terminal ne passe pas par la position candidate ou la position candidate modifiée, rectifier le trajet entre la position du premier terminal et la position du dispositif terminal pour faire en sorte que le trajet rectifié entre la position du premier terminal et la position du dispositif terminal passe par la position candidate ou la position candidate modifiée.

13. Dispositif terminal selon l'une quelconque des revendications 8 à 11, dans lequel le module de réception est configuré en outre pour recevoir un message d'accusé de réception renvoyé par le premier terminal, le message d'accusé de réception indiquant que le premier terminal accepte la position candidate modifiée et qu'il n'apportera plus aucune modification à la position candidate modifiée ; et
lequel dispositif terminal comprend en outre : un module de navigation, configuré pour définir la position candidate modifiée comme une adresse de destination pour procéder à une navigation le long du trajet.

14. Dispositif terminal selon l'une quelconque des revendications 8 à 11, dans lequel :
le module de réception est en outre conçu pour recevoir une position candidate encore modifiée et renvoyée par le premier terminal ; et
le module de carte est en outre conçu pour afficher, sur la carte du dispositif terminal, la position candidate qui a encore été modifiée.

15. Dispositif terminal selon l'une quelconque des revendications 8 à 14, dans lequel le dispositif terminal est un téléphone mobile, et le téléphone mobile comprend en outre : une coque, une carte de circuit, un processeur, un écran tactile, un circuit radiofréquence, un microphone, un haut-parleur et une source d'alimentation ; l'écran tactile est monté sur la coque, la carte de circuit est montée dans un espace défini par la coque, et le processeur et le circuit radiofréquence sont disposés sur la carte de circuit ;
le processeur comprend une partie ou la totalité des modules et unités précédents ; le processeur est conçu pour effectuer un traitement sur des données entrées via l'écran tactile et/ou émettre un résultat des données traitées via l'écran tactile ;
le circuit radiofréquence est conçu pour établir une communication entre le téléphone mobile et un réseau sans fil, et mettre en oeuvre la réception et l'envoi de données entre le téléphone mobile et le réseau sans fil ;
le microphone est conçu pour capturer un son et convertir le son capturé en données sonores de sorte que le téléphone mobile envoie les données sonores au réseau sans fil via le circuit radiofréquence ;
le haut-parleur est conçu pour restituer les données sonores reçues par le téléphone mobile du réseau sans fil via le circuit radiofréquence en son et lire le son pour un utilisateur ; et
la source d'alimentation est conçue pour alimenter divers circuits ou composants du téléphone mobile.
